# EUROPEAN PATENT APPLICATION

(11) **EP 2 011 574 A1**
(43) Date of publication of application: **07.01.2009**
(21) Application number: 07270035.4
(22) Date of filing: 02.07.2007
(51) Int. Cl.: B01L 3/00, F15C 5/00

(54) **Assaying device and method of transporting a fluid in an assaying device**

(71) Applicant: STMicroelectronics (Research & Development) Limited, Marlow, Buckinghamshire SL7 1YL (GB); STMicroelectronics S.r.l., 20041 Agrate Brianza (Milano) (IT)
(72) Inventor: Raynor, Jeffrey, Edinburgh, EH12 5HZ (GB); Scurati, Mario, 20147, Milano (IT)
(74) Representative: McBride, Peter Hill

(57) **Abstract**

An assaying device comprising a one or more detectors, a transport means and an inlet that is connected to the one or more detectors by a one or more channels;
characterised in that the transport means comprises a one or more sealed, vacuum-containing chambers being connected to the channels;
wherein each of the chambers comprises an electrically activated puncturing means configured in use to puncture a wall of a chamber to cause a differential pressure in the one or more channels and thereby transport a fluid from the inlet to the one or more detectors.

## Description

### Field of the Invention

The present invention relates to an assaying device and a method of transporting a fluid in an assaying device.

### Background of the Invention

Recent years have seen rapidly growing demand for biological assays for a diverse range of applications including: biomedical research, disease diagnosis, food pathogen detection, environmental analysis and forensics. However, biological assays typically involve a number of steps including cell separation, cell lysis and DNA amplification. Ideally, these steps and the actual detection of the desired biological molecules would all be performed in a single device. However, this would require miniaturising and connecting systems such as cytometers, separators and bioreactors etc. Current biosensor systems include separate readers, which tend to be very expensive. Similarly, other current biosensor systems that integrate sensor elements and photodetectors, require the flow and control of small volumes of liquids on the surface of the device.

In recent years, attention has turned to microfluidics and its methods for fabricating individual and integrated flow configurations with length scales on the order of tens and hundreds of microns. Such integrated analysis systems are known as µTAS (micro-total analysis systems) or lab-on-a-chip systems. These devices use a custom silicon processing technology which enables the construction of buried microfluidic channels. However, this technology is based solely on micromachined silicon and typically does not include any integrated semiconductor structures (transistors, diodes etc). Furthermore, the buried microfludic channels of such systems are not compatible with CMOS sensing structures as they are at similar depths below the surface of the silicon.

US Patent Applications US20040141856 and US20050233440 describe analysis devices employing micropumps with various (buried) chambers and a diaphragm manufactured using a custom fabrication technology. Further, US Patent Application US20050142597 describes a microreactor employing buried chambers and a sealing layer, which is perforated during use. Similarly, US Patent Application US20050176037 describes an integrated microreactor for real-time polymerase chain reaction (PCR) with optical monitoring, wherein the microreactor employs buried channels into which a light beam is channelled. Further prior art includes US Patent US6116863 (which describes a microactuated device driven by an electromagnetic driver, overlapping a magnetically permeable diaphragm) and European Patent Application EP1403383. However, whilst it is possible to implement microfluidic channels and chambers on the top surface of silicon with detection underneath, the main problem resides in producing a controlled flow in the microfluidic channels.

### Summary of the Invention

According to the invention there is provided an assaying device and a method of transporting a fluid in an assaying device as provided in the appended claims.

### Advantages of the Invention

In contrast with the systems described in US20050176037, US20050142597 and EP1403383, whose substrate material comprises silicon only (without "tubes", wherein connection is guaranteed by silicon wafer bonding) and which do not comprise any moving mechanical parts; the present invention provides a controlled flow in microfluidic channels by connecting the channels to a one or more sealed chambers (henceforth known as vacuum chambers), each of which has a vacuum therein. In use, an opening is formed in a wall of the vacuum chamber and the vacuum causes a differential air-pressure that sucks liquid along the channel. This contrasts with the system described in US6116863, which employs electromagnetically driven vertical membrane movement to provide bi-directional fluid movement.

However, the problem remains as to how to create the opening in a wall of a vacuum chamber at the right place and at the right time. In contrast with US20050142597, wherein such perforation is performed with a syringe, the present invention electrically perforates a vacuum chamber wall. Whilst it is possible to use a "fuse" from poly-silicon that can be blown at the appropriate time to open a wall of a vacuum chamber, such poly-silicon fuses are not part of standard CMOS process technology. Accordingly, another embodiment of the present invention employs fuses that are part of standard CMOS process technology. Thus, in contrast with the systems described in US20040141856 and US20050233440, this embodiment uses surface techniques and fuses in a standard fabrication technology.

More generally, the integrated assaying device is a single device which combines bio-optical detection, microfluidics and optical sensing, using a substrate produced by way of a standard CMOS production technology. The integrated assaying device integrates micro-fluidics and (optical) sensors using standard CMOS (processing) technology, thereby producing a low-cost biosensor system. Further, because the photodetector in the integrated assaying device is located closer to any chemical reactions (occurring in the microfluidic chambers), the sensitivity of the detection process is increased.

### Brief Description of the Drawings

Several embodiments of the invention will herein be described by way of example only with reference to the accompanying Figures in which:
Figure 1 is plan view of a first embodiment of an assaying device;
Figure 2 is a cross-sectional view, along the line X-X, of a surface microfluidic chamber in the first embodiment of the assaying device shown in Figure 1;
Figure 3 is a cross-sectional view of a second embodiment of the assaying device;
Figure 4 is a plan view of a vacuum chamber in the second embodiment of the assaying device shown in Figure 3;
Figure 5 is a cross-sectional view of a vacuum pump fuse before use, in the vacuum chamber shown in Figure 4, along the line A-A';
Figure 6 is a cross-sectional view of a vacuum pump fuse in the vacuum chamber shown in Figure 4, showing a first method of transporting a fluid in an assaying device;
Figure 7 is a cross-sectional view of a vacuum pump fuse in the vacuum chamber shown in Figure 4, showing a second method of transporting a fluid in an assaying device; and
Table 1 details the dimensions of various elements of the vacuum chamber shown in Figure 4.

### Detailed Description

### First Embodiment : Vacuum Chamber with Polysilicon Fuses

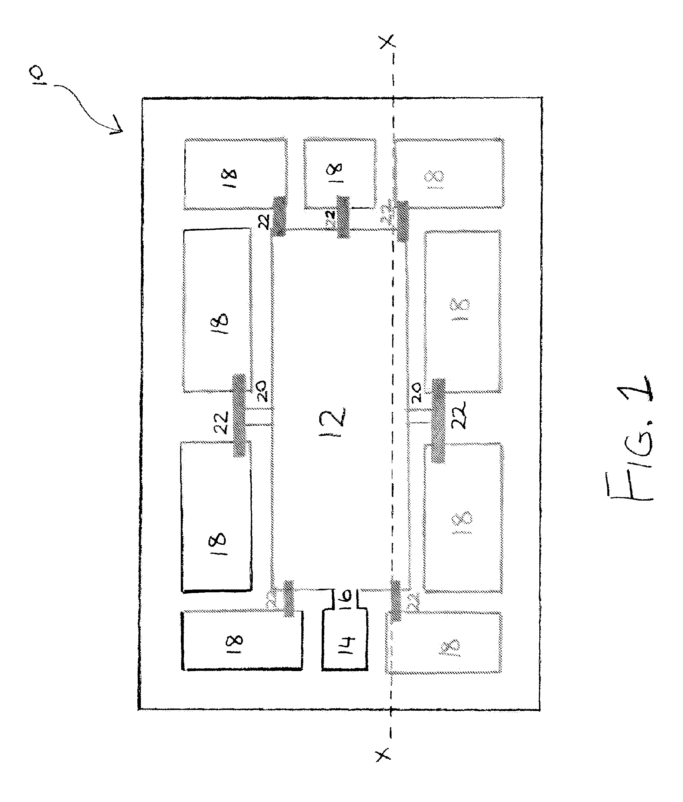

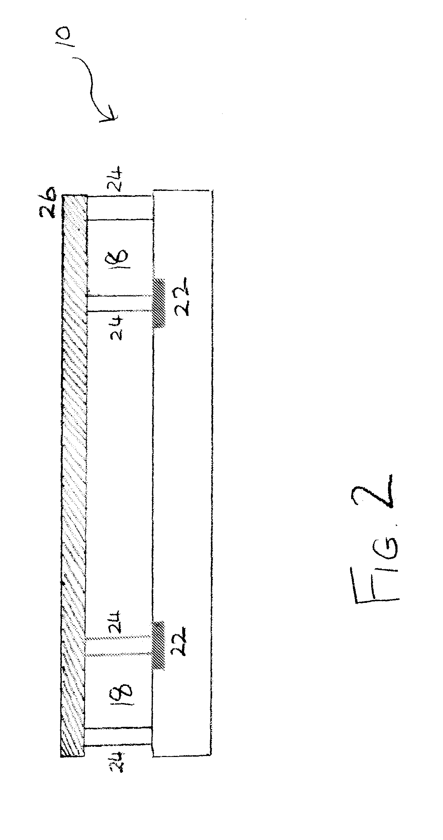

Referring to Figure 1, the assaying device 10 comprises a central photosensor 12 connected to an inlet 14 through a channel 16. The photosensor 12 is also connected to a plurality of vacuum chambers 18 through channels 20 with intervening fuses 22. Referring to Figure 2, the vacuum chambers 18 are formed, by the deposition/formation of polymer walls 24 on the surface of the assaying device 10 during fabrication. The assaying device 10 is then sealed under vacuum with a tape 26. Whilst it is possible to seal the entire surface of the assaying device 10 (i.e. including the inlet 14) with the intention of having the tape 26 pierced during operation; it is also possible to directly include a hole in the tape 26 during fabrication to allow easy entry of a syringe/pipette therein. If the device is not to be pierced, the top layer could be something more substantial - e.g. glass (with an entry hole) or even silicon (again with entry hole). Silicon is attractive as it has the same thermal co-efficient of expansion as the substrate material.

In use, a user introduces a fluid sample to the inlet 14 and the assaying device 10 is connected to power and/or controller system [not shown] (which may or may not be integrated onto the assaying device 10). In accordance with a pre-defined sequence and timing, the controller then passes current through one or more of the polysilicon fuses 22 causing them to rupture and break the seal on their corresponding vacuum chambers 18. The force of the vacuum/air pressure released by the controlled blowing of the fuses 22, drives and controls the flow of the sample fluid over the surface of the photosensor 12, thereby ensuring smooth and even distribution of the sample on the photosensor 12.

### Second Embodiment: Vacuum Pump with Metal Fuses

The advantage of the first embodiment is that polysilicon fuses typically have relatively high resistances. Accordingly, such fuses absorb and dissipate energy easily and are easily blown. However, whilst polysilicon fuses are fairly common in standard CMOS processes, they are usually located very close to the surface of the silicon in an integrated circuit. Further, the layers (metal and inter-metal dielectric) disposed above the fuses, prevent their use to allow the passage of gas/air.

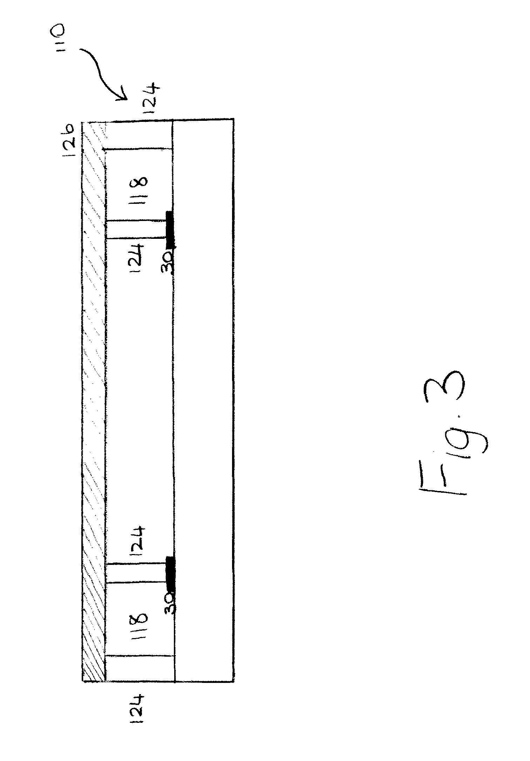

Referring to Figure 3, a second embodiment of the assaying device 110, comprises the same basic structural features of the vacuum chambers used in the first embodiment. However, in contrast with the first embodiment, the second embodiment uses thin sections of a top metal 30 in its vacuum chambers and one or more openings in an overglass (silicon oxide/silicon nitride/phosphosilicate) that covers the device 110. Such openings are a standard feature on all silicon devices, wherein the openings are normally located over the devices' bond-pads to enable electrical connection therewith. However, in the second embodiment, an opening in the overglass is located directly over a top metal section 30 in a vacuum chamber.

This arrangement is unusual because normal design rules for ICs would typically teach against the placement of such openings at places other than bond-pads. In particular, an overglass is normally used to protect a device (especially the top metal from damage) during packaging/assembly of the device and to prevent moisture ingress, which would otherwise lead to corrosion of the metal or delamination of the device. These factors would seriously affect the reliability of the IC. However, in the present case, overglass openings are protected by the polymer (etc.). Furthermore, the device is a single-use device and its shelf time will be usually limited by the bio-chemical assays used.

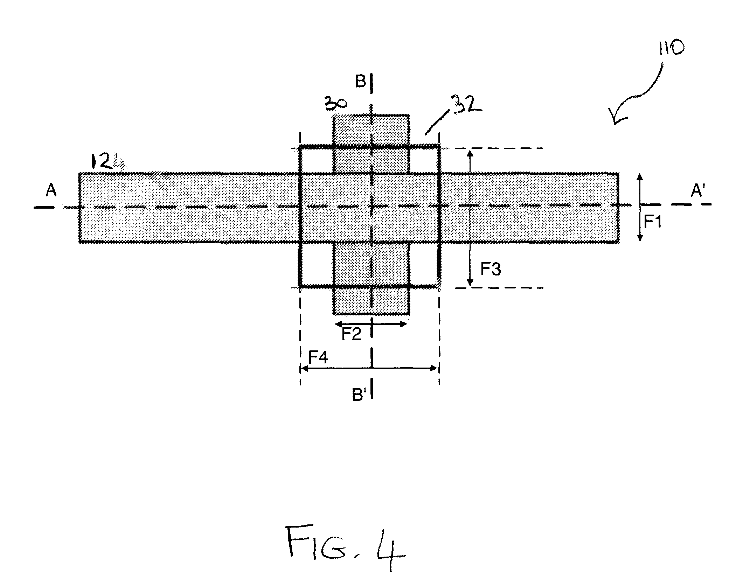

In particular, referring to Figure 4, the opening 32 (which may be, for example, rectangular in shape) is formed over the intersection of the top-layer metal 30 and the polymer walls 124 of the vacuum chamber. The dimensions of the opening 32 are not critical (i.e. the manufacturing tolerances of such openings when included in a standard silicon device are relatively coarse). Referring to table 1, typically, the width (F4) and height (F3) of the pad opening is 10µm-60µm. In modern CMOS process technologies, copper is typically used as a conductor in some or part of the metal interconnection. However, in other process technologies, aluminium is used. The above process of locating an opening in the overglass over a top metal layer can be used with either aluminium or copper top-level layers. In the following example, the top layer metal is made from aluminium. However, it will be appreciated that the second embodiment is not limited to this top layer metal, and in particular, the second embodiment could employ any suitable top layer metal.

It is common for the top layers of metal to be used for power/ground conduction. To minimize voltage drops across the top metal layers, their resistivity is typically low, since they are often thicker than the other metal layers in the process technology. Low resistivity is usually an advantage for a conductor, but in the second embodiment of the assaying device, the top layer metal is used as a fuse/heating element. Hence, having a higher resistivity is beneficial. To achieve such higher resistivity, it may be necessary to thin the top metal in the area in which it is to be used as a fuse (henceforth known as a fuse area). In particular, the metal conductor is generally made as thin as possible (dimension F2). With the inclusion of an opening in the overglass over the intersection of the polymer walls of a vacuum chamber and its metal fuse, the top layer metal is now exposed in the fuse area. However, the non-removed overglass can be used as a barrier to prevent the etching of the conductors outside the fuse area.

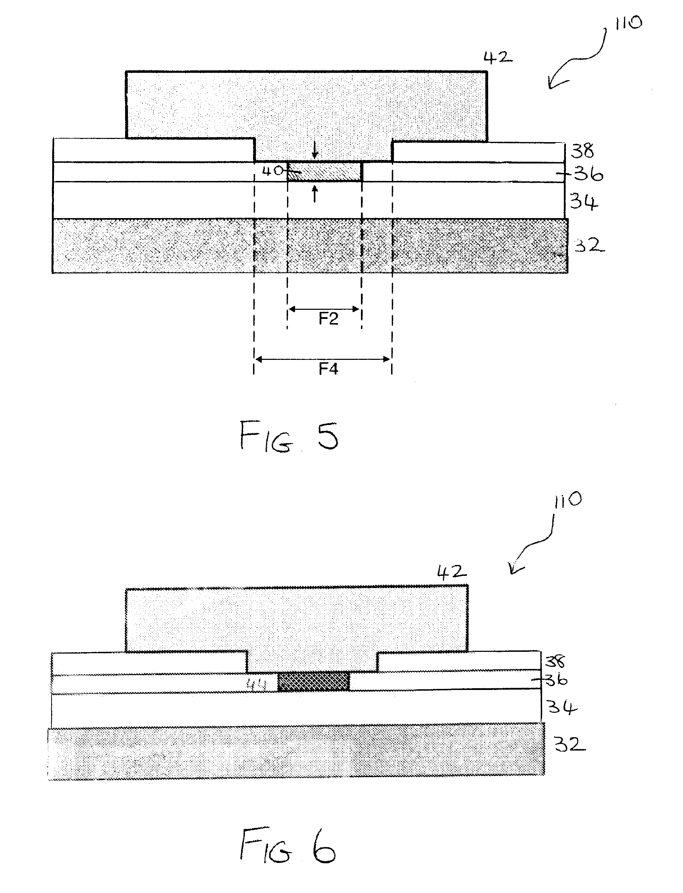

Referring to Figure 5, an exemplary vacuum chamber in the second embodiment of the assaying device, comprises a silicon substrate 32 coated with a layer 34 of metal and dielectric. The metal and dielectric layer 34 is in turn coated with a dielectric top metal layer 36, with an embedded aluminium fuse 40. The dielectric top metal layer 36 is in turn coated with a silicon oxide and nitride overglass 38, which is typically 900 nm thick. The, silicon oxide and nitride overglass 38 is provided with an opening therethrough, wherein the opening is located directly over the dielectric top metal layer 36 and is filled with a polymer plug 42. The opening in the silicon oxide and nitride overglass 38 is larger than the aluminium fuse 40. Thus, before the vacuum pump of the assaying device 110 is activated, the polymer plug 42 is in direct contact with the aluminium fuse 40 and the dielectric top metal layer 36. Outside the fuse area, the polymer plug 42 is in direct contact with the silicon oxide and nitride overglass 38. As a result, the polymer plug 42, top metal layer 36 and aluminium fuse 40 form an impenetrable barrier over the assaying device.

For the second embodiment of the assaying device 110 to detect an analyte, a sample fluid must flow over the surface of the assaying device's photodetector (not shown). This flow is achieved using the differential air pressure formed when the fuse in one of the second embodiment's vacuum chambers is opened. There are various mechanisms for opening the fuse. The first is shown in Figure 6, wherein a high current is passed through the dielectric top metal layer 36 to the aluminium fuse 40. The high current causes the metal of the aluminium fuse 40 to heat up. In particular, since the aluminium fuse 40 has a very small volume, the heat generated by the high current is sufficient to cause the aluminium fuse 40 to melt and possibly evaporate. The melting process, opens up a channel between the polymer plug 42 and the silicon substrate 32 forming a void 44 therebetween. The void 44 allows the passage of air into the vacuum chamber and the resulting differential air pressure causes the fluid sample to flow.

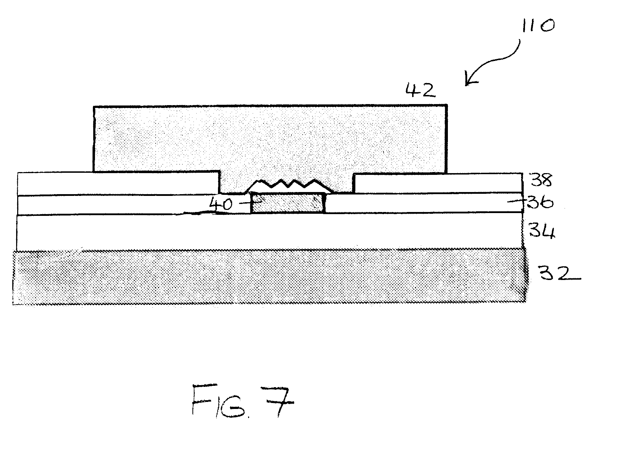

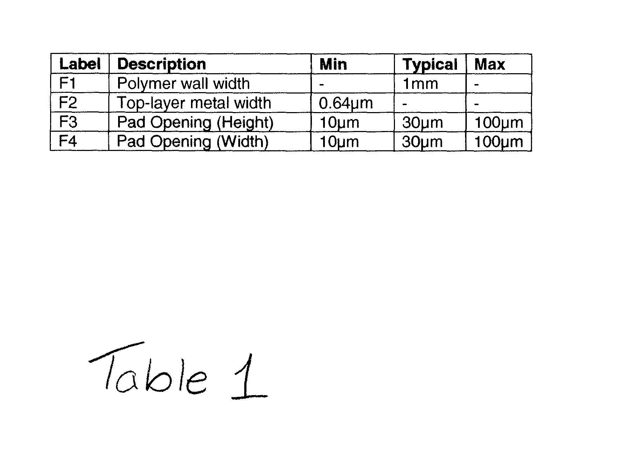

An alternative technique is illustrated in Figure 7. In common with the previous technique, a high current is passed through the dielectric top metal layer 36 to the aluminium fuse 40, which causes it to heat up. The heat of the aluminium fuse 40 is transferred to the polymer plug 42, which causes it to deform (e.g. melt). The deformation of the polymer plug 42 produces a void in the above-mentioned impenetrable barrier and allows the passage of air/gas into the vacuum chamber, thereby producing a differential air pressure in the assaying device 110, causing the fluid sample to flow.

Whilst both of the above techniques causes the creation of a void (as a result of the thermal resistance between the aluminium fuse 40 and the polymer plug 42), a shorter, higher-current pulse on the aluminium metal fuse 40 is likely to cause the metal conductor to melt/evaporate, whereas, a longer, lower-current pulse on the aluminium fuse 40 is more likely to cause the polymer plug 42 to deform. Since both techniques require the flow of high currents, it is desirable to have all the wiring for the aluminium fuse 40 on a single layer (i.e. the dielectric top metal layer 36). This avoids the formation of interconnections between layers ("vias") which tend to have high resistivity (and would be more likely to "blow" than the fuses).

Modifications and alterations may be made to the above without departing from the scope of the invention.

## Claims

1. An assaying device (10, 110) comprising a one or more detectors (12), a transport means and an inlet (14) that is connected to the one or more detectors (12) by a one or more channels (16);
**characterised in that** the transport means comprises a one or more sealed, vacuum-containing chambers (18) being connected to the channels (16);
wherein each of the chambers (18) comprises an electrically activated puncturing means (22, 30) configured in use to puncture a wall of a chamber (18) to cause a differential pressure in the one or more channels (16) and thereby transport a fluid from the inlet (14) to the one or more detectors (12).

2. The assaying device (10, 110) as claimed in claim 1, wherein the puncturing means (22,30) is a fuse; and the assaying device (10, 110) comprises a current supply means configured to supply a current to one or more of the fuses (22, 30) to cause the fuse (22, 30) to heat.

3. The assaying device (10, 110) as claimed in claim 2, wherein the assaying device (10, 110) comprises a controlling means in communication with the current supply means to control the fuses (22,30) to which the current supply means supplies current.

4. The assaying device (10) as claimed claim 2 or claim 3 wherein the fuse (22) comprises a polysilicon material.

5. The assaying device (10) as claimed in claim 4 wherein each fuse (22) is embedded in the base of each chamber (18) at an intersection between the base and a wall of the chamber (18).

6. The assaying device (110) as claimed in claim 2 or claim 3 wherein the fuse (30) comprises a metal.

7. The assaying device (110) as claimed in claim 6, wherein each fuse (30) is provided on top of the base of each chamber (18) at an intersection between the base and a wall of the chamber (18).

8. The assaying device (110) as claimed in claim 6 or claim 7 wherein the assaying device (110) is covered with an overglass.

9. The assaying device (110) as claimed in claim 8 wherein the overglass is provided with an opening (32) disposed directly over the intersection of the base and a wall of the chamber (18).

10. A clinical diagnostic system comprising the assaying device (10, 110) as claimed in any one of the preceding claims .

11. A food testing system comprising the assaying device (10, 110) as claimed in any one of claims 1 to 9.

12. A pharmaceutical testing system comprising the assaying device (10, 110) as claimed in any one of claims 1 to 9.

13. A method of transporting a fluid in an assaying device (10, 110), the method comprising the steps of:
providing a one or more channels (16) in the assaying device (10, 110) for transporting the fluid;
connecting a one or more sealed, vacuum-containing chambers (18) to a one or more of the channels(16);
providing an electrically activated puncturing means (22, 30) in each chamber (18); and
providing an electrical activation signal to one or more of the puncturing means (22, 30) to cause the puncturing means (22, 30) to puncture a wall of its corresponding chamber (18) and thereby create a differential pressure in the one or more channels (16) to move the fluid in the channel (16).

14. The method as claimed in claim 13, wherein:
the step of providing an electrically activated puncturing means (22, 30) comprises the step of providing a fuse (22, 30); and
the step of providing an electrical activation signal to one or more of the puncturing means (22, 30) comprises the step of supplying a current to the fuse (22, 30).

15. The method as claimed in claim 14 wherein the step of supplying a current to the fuse (22, 30) comprises the step of supplying a short, high-current pulse to the fuse (22, 30) to cause the fuse (22, 30) to melt.

16. The method as claimed in claim 14 wherein the step of supplying a current to the fuse (22, 30) comprises the step of supplying a long-duration, low-current pulse to the fuse (22,30) to cause a wall of the chamber (18) to deform.
